# EUROPÄISCHE PATENTSCHRIFT

(11) **EP 2 261 523 B1**
(45) Veröffentlichungstag und Bekanntmachung des Hinweises auf die Patenterteilung: **29.07.2015**
(21) Anmeldenummer: 10162091.2
(22) Anmeldetag: 10.05.2010
(51) Int. Cl.: F16C 33/78, F16J 15/32

(54) **Dichtungsring**
Gasket
Anneau d'étanchéité

(30) Priorität: 20.05.2009 DE 102009022205
(43) Veröffentlichungstag der Anmeldung: 15.12.2010
(73) Patentinhaber: Schaeffler Technologies AG & Co. KG, 91074 Herzogenaurach (DE)
(72) Erfinder: Hartmann, Erwin, 97493 Bergrheinfeld (DE); Walter, Wilhelm, 97490 Poppenhausen (DE)

(56) Entgegenhaltungen:
- EP-A1- 1 898 132
- EP-A2- 1 167 792
- DE-A1- 19 614 649

## Beschreibung

### Gebiet der Erfindung

Die Erfindung betrifft einen Dichtungsring zum Abdichten eines Wälzraumes eines Wälzlagers, insbesondere Radlager, mit einem einen elastischen Teil haltenden Haltering, wobei der elastische Teil eine zur dichtenden Anlage an ein relativ zum Dichtungsring rotierbares Element vorgesehene, verzweigende Dichtlippe aufweist, wobei die verzweigende Dichtlippe an einem Verzweigungspunkt in eine erste und eine zweite Dichtlippe verzweigt.

Ein derartiger Dichtungsring kommt in Dichtungsanordnungen in Wälzlagern, insbesondere in Radlagern, zum Einsatz.

Aus DE 196 14 649 A1 ist eine Dichtungsanordnung für Radlager bekannt, die als Kassettendichtungen ausgeführt ist und aus zwei Ringen besteht, die sich relativ zueinander bewegen und zur Dichtung des Wälzraumes der beiden Wälzkörperreihen vorgesehen sind. Im Längsschnitt haben beide Ringe eine L-artige Form, wobei der üblicherweise als Schleuderring bezeichnete, axial außenliegende Ring ein Elastomer mit mehreren Lippen trägt und somit auch als Dichungstring bezeichnet werden kann. Der am Außenring befestigte Dichtungsring stellt die Anlaufflächen der verschiedenen Dichtungslippen zur Verfügung.

Die Problematik, die sich bei der Lehre des genannten Dokumentes und auch bei dem sonstigen Stand der Technik ergibt ist, dass als Vordichtung vorgesehene Dichtlippen durch Abrieb mit der Zeit ihren Dichtkontakt und damit ihre optimale Wirkung einbüßen. Dies gilt insbesondere für axiale Dichtlippen, die in einer ersten Betriebsphase dichtend anliegen und nach einer gewissen Zeit durch einen entsprechenden Materialverlust zunächst die erforderliche Vorspannungskraft und danch auch den Kontakt zur Anlauffläche verlieren. In diesem Zustand kann eine Dichtlippe immer noch als Spaltdichtung dienen, jedoch büßt die Dichtungsanordnung insgesamt an Dichtungswirkung ein. Außerdem werden nach dem Abrieb einer ersten Dichtlippe weitere nachgeordnete Dichtlippen dadurch mehr Umwelteinflüssen ausgesetzt, womit auch an der nachgeordneten Dichtlippe ein verstärkter Materialabrieb auftritt, da nunmehr Fremdpartikel und Feuchtigkeit bis zu dieser durchdringen können.

Daraus folgt, dass eine erhöhte Reibung der Dichtungsanordnung aufgrund einer hohen Anzahl von Dichtlippen in Kauf zu nehmen ist, wenn eine große Lebensdauer des Wälzlagers beziehungsweise Radlagers erwünscht ist. Dies führt zwangsläufig zu einem erhöhten Kraftstoffverbrauch, insbesondere in der Anfangszeit der Lagernutzung.

Eine bekannte Verbesserungsmöglichkeit besteht darin, möglichst viele axiale Dichtlippen zu verwenden, die im Vergleich zu radialen Dichtlippen weniger Reibung verursachen. Aus EP 1 898 132 A1 ist eine Dichtungsanordnung mit einem Dichtungsring gemäß dem Oberbegriff des Anspruchs 1 bekannt, also mit zwei im Längsschnitt parallel angeordneten Dichtlippen, die nacheinander durch den oben beschriebenen Abrieb ausfallen. Allerdings stellen axiale Dichtlippen im Vergleich zu radialen Dichtlippen eine reibungsarme Alternative dar, die den nachteiligen Effekt des Abriebs nur geringfügig abgeschwächt.

Der Erfindung liegt die Aufgabe zu Grunde, eine kostengünstige und reibungsarme Dichtungsanordnung mit hoher Lebensdauer anzugeben.

Die Aufgabe wird bei einem Dichtring der eingangs genannten Art dadurch gelöst, dass unter Vorspannung der verzweigenden Dichtlippe der Verzweigungspunkt in Abhängigkeit des Lippenabriebs bewegbar ist. Ferner wird die Aufgabe durch eine Dichtungsanordnung und ein Wälzlager mit einem erfindungsgemäßen Dichtring gelöst.

Erfindungsgemäß ist der Dichtring zum Abdichten eines Wälzraumes eines Wälzlagers, insbesondere Radlager, vorgesehen. Ein Wälzraum wird begrenzt durch mindestens einen Innen- und einen Außenring, gegebenenfalls auch durch die Radnabe, sowie durch zwei Dichtungsanordnungen, die die axialen Öffnungen zwischen dem Innen- und Außenring abdichten. Darin befinden sich in der Regel eine Schmierung in Form von Fett oder Öl und ein Wälzkörperkäfig mit den Wälzkörpern.

Der Dichtungsring ist mit einem einen elastischen Teil haltenden Haltering ausgerüstet, wobei der elastische Teil eine zur dichtenden Anlage an ein relativ zum Dichtungsring rotierbares Element vorgesehene Dichtlippe aufweist. Bei dem elastischen Teil handelt es sich beispielsweise um ein Elastomer, das gegebenenfalls an mehreren Auflageflächen anliegt. Denkbar ist auch, dass dieses Elastomer zur statischen Dichtung an der Verankerung des Dichtungsringes am Innen- oder Außenring vorgesehen ist. Bei dem rotierbaren Element handele sich beispielsweise um einen weiteren Dichtungsring oder Schleuderring.

Die Dichtlippe ist eine an einem Verzweigungspunkt in eine erste und eine zweite Dichtlippe verzweigende Dichtlippe, jedoch ist der Verzweigungspunkt nicht am Haltering angesiedelt, sondern ist in einer Entfernung vom Haltering angeordnet, bei der der elastische Teil eine Relativbewegung des Verzweigungspunktes in Bezug auf den Haltering nicht im Wege steht. Dies ist ebenso eine Frage der Elastizität, sowie des Abstandes zwischen Haltering und Verzweigungspunkt. Bei einer geringeren Elastizität des elastischen Teiles muss eine größere Entfernung im Kauf genommen werden und umgekehrt.

Erfindungsgemäß ist vorgesehen, dass der Verzweigungspunkt in Abhängigkeit des Lippenabriebs bewegbar ist. Die verzweigende Dichtlippe bewirkt durch die voreingestellte Position des Dichtungsrings eine Vorspannung der ersten und zweiten Dichtlippe. Bei der ersten und bei der zweiten Dichtlippe handelt es sich um eine axiale Dichtlippe. Die Position des Verzweigungspunkts innerhalb der Dichtungsanordnung wird neben der Vorspannung auch durch Eigenschaften der ersten und zweiten Dichtlippe (Länge, Elastizität, Ausrichtung) sowie der Anbindung der verzweigten Dichtlippe an den Haltering bestimmt.

Kommt es nun während der Lebensdauer des Wälzlagers zu einem verstärkten Abrieb der ersten (aber auch der zweiten) Dichtlippe, so verkürzt sich die Länge der ersten (zweiten) Dichtlippe zwischen dem Verzweigungspunkt und deren Auflagefläche. Durch die Vorspannung über zwei Dichtlippen wird ein Lippenabrieb nicht zu einem völligen Vorspannungsverlust führen, sondern lediglich zu einer Bewegung des Verzweigungspunkts. Damit ändert der Verzweigungspunkt seine relative Position im Vergleich zum Dichtungsring und anderen Elementen der Dichtungsanordnung. Damit tritt der nachteilige Effekt der Luftspaltbildung nicht oder nur sehr verspätet ein, womit die zweite Dichtlippe, gegebenenfalls auch weitere Dichtlippen, effektiv während der gesamten Lebensdauer des Wälzlagers geschützt werden können. Damit erhöht sich die Lebensdauer des Wälzlagers beträchtlich.

Erfindungsgemäß ist die erste und die zweite Dichtlippe zur dichtenden Anlage an ein oder zwei relativ zum Dichtungsring rotierbaren Elemente vorgesehen. Bei diesen relativ rotierbaren Elementen kann es sich beispielsweise um einen Schleuderring oder andere Elemente eine Dichtungsanordnung, der Radnabe oder eines Lagerrings handeln. Damit ist ein erfindungsgemäßer Dichtungsring äußerst vielseitig innerhalb einer Dichtungsanordnung einsetzbar und leicht zu integrieren.

Bei einer vorteilhaften Ausführungsform weisen die Anlageflächen der ersten und zweiten Dichtlippe im gegenüber der Gegenflächen des jeweiligen rotierbaren Elemente des vorgespannten Zustand einen größeren Abstand voneinander auf als in einem Ausgangszustand. Den Anlageflächen der ersten und zweiten Dichtlippe liegt jeweils eine Gegenfläche auf denen rotierbaren Element gegenüber. Die Anlageflächen bewegen sich an den Gegenflächen anliegend voneinander weg, wenn die verzweigende Dichtlippe mit der Vorspannung beaufschlagt wird. Vor der Beaufschlagung der Vorspannung befindet sich die verzweigende Dichtlippe in einem Ausgangszustand, in welchem die Anlageflächen der ersten und zweiten Dichtlippe am nächsten beieinander liegen. Die Vorspannung zeigt dadurch Wirkung, dass sie die Anlageflächen an den Gegenflächen anliegend voneinander entfernt. Je näher dadurch der Verzweigungspunkt dem rotierbaren Element gebracht wird, desto größer ist der maximal mögliche Abrieb der verzweigende Dichtlippe ohne Dichtungswirkung einzubüßen. Ferner können durch eine entsprechend gewählte Vorspannung die jeweiligen steilen oder flachen Winkel der ersten und zweiten Dichtlippe eingestellt werden.

Vorteilhafterweise kompensieren sich durch die Vorspannung der verzweigende Dichtlippe verursachten Radialkräfte der ersten und zweiten Dichtlippe im Verzweigungspunkt gegenseitig. Damit wird das Problem der Halterung der verzweigende Dichtlippe am Haltering dahingehend vereinfacht, dass die Radialkräfte bereits im Verzweigungspunkt kompensiert worden sind und nicht auf den Haltering übertragen werden müssen. Außerdem stützen sich die erste und die zweite Dichtlippe damit gegenseitig, wenn beispielsweise die zweite Dichtlippe einem erhöhten Materialabrieb im Vergleich zur ersten Dichtlippe ausgesetzt ist. Durch eine Übertragung der Radialkräfte im Verzweigungspunkt wird eine gleichzeitige Anlage der ersten und zweiten Dichtlippe an der jeweiligen Gegenfläche sichergestellt. Dahingegen muss die Bewegung des Verzweigungspunktes nicht notwendigerweise nur in radialer Richtung stattfinden. Die Bewegung kann zumindest teilweise auch in axialer Richtung verlaufen.

Vorteilhafterweise weist die verzweigende Dichtlippe im Längsschnitt im wesentlichen einer Y-Form auf. Eine im wesentlichen gleiche Länge der ersten und zweiten Dichtlippe ist aus Stabilitätsgründen vorteilhaft, jedoch nicht zwingend. Beispielsweise ist es sinnvoll die erste Dichtlippe länger als die zweite Dichtlippe auszuführen, wenn die erste Dichtlippe auch dem größeren Materialabrieb unterliegt.

Vorteilhafterweise kann der erfindungsgemäße Dichtungsring irgend ein Ring der Dichtungsanordnung verkörpern. Dies kann beispielsweise ein so genannter Schleuderring oder auch dessen Pendant sein, der üblicherweise auch als Dichtungsring bezeichnetet wird, weil dieser im Gegensatz zum Schleuderring meist den elastischen Teil trägt.

Vorteilhafterweise kann der Dichtungsring in Dichtungsanordnungen mit Dichtungs- und Schleuderring eingesetzt werden, wobei die Dichtungsanordnung auch als Kassettendichtung ausgeführt sein kann. Beide Arten von Dichtungsanordnungen werden gerne in Wälzlagern, insbesondere Radlagern, verwendet.

Weitere vorteilhafte Ausbildungen und bevorzugte Weiterbildungen der Erfindung sind der Figurenbeschreibung und/oder den Unteransprüchen zu entnehmen.

Im folgenden wird die Erfindung anhand der in den Figuren dargestellten Ausführungsbeispiele näher beschrieben und erläutert.

### Figurenbeschreibung

Es zeigen:
- Fig. 1: eine Dichtungsanordnung mit verzweigender Dichtlippe im vorgespannten Zustand, und
- Fig. 2: die Dichtungsanordnung aus Fig. 2 im Ausgangszustand.

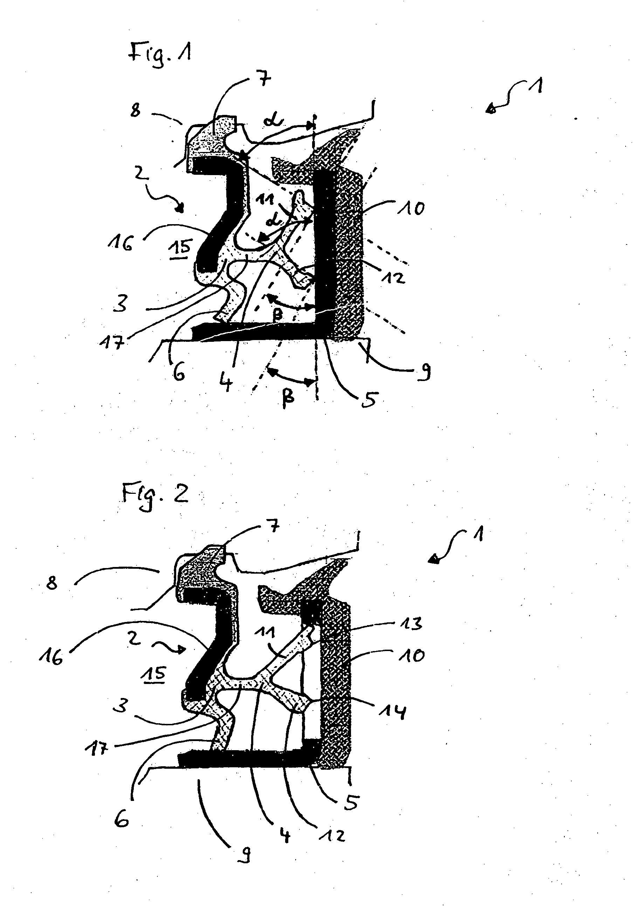

Fig. 1 zeigt eine Dichtungsanordnung 1 mit verzweigender Dichtlippe 17 im vorgespannten Zustand. Die verzweigende Dichtlippe 17 ist aufgrund der Position des Dichtungsrings 2 gegenüber dem radialem Teil eines Schleuderringes 5 vorgespannt. Die Auflageflächen 13,14 der ersten beziehungsweise zweiten Dichtlippe 11,12 liegen dichtend an.

Der elastische Teil 3 ist am Haltering 16 befestigt, zum Beispiel anvulkanisiert, und gibt dem Dichtungsring 2 Formstabilität. Der elastische Teil 3 beinhaltet eine radiale Dichtlippe 6, die auf dem zylindrischen Teil des Schleuderringes 5 anliegt, sowie ein Befestigungselement 7, welches in einer Innennut des Außenringes 8 angeordnet ist um dem Dichtungsring 2 eine axiale Positionssicherheit zu gewährleisten. Der abzudichtende Wälzraum 15 liegt axial neben dem Dichtungsring 2 und ist nur andeutungsweise zu erkennen.

Der Schleuderring 5 muss für die verzweigende Dichtlippe 17 lediglich Gegenflächen zur Verfügung stellen, auf denen die Auflageflächen 13,14 aufliegen können. Ansonsten kann dieser beliebig gestaltet werden, so z.B. können weitere Dichtlippen oder Spaltdichtungen vorgesehen sein. Optional ist auch an einen Encoder 10 zu denken, der gegebenenfalls mit den dichtenden Elementen des Schleuderringes 5 einstückig ausgeführt ist.

Die verzweigende Dichtlippe 17 weist zwischen dem Verzweigungspunkt 4 und dem Haltering 16 ein zylindrisches, elastisches Segment auf, wobei der Verzweigungspunkt 4 ausreichend weit vom stabilisierenden Haltering 16 entfernt angeordnet ist. Damit ist aufgrund der Elastizität dieses zylindrischen Teiles eine Bewegung, insbesondere eine radiale Bewegung, des Verzweigungspunktes 4 gewährleistet. Die Bewegbarkeit wäre nicht gegeben, wenn der Verzweigungspunkts 4 unmittelbar neben dem Haltering 16 angeordnet wäre.

Denkbar ist auch, dass das elastische Segment zwischen Verzweigungspunkts 4 und dem Haltering 16 eine konische oder ähnliche Form aufweist, um eine spezielle Kraftverteilung zwischen erster und zweiter Dichtlippe 11,12 zu erreichen. Eine zylindrische Form des elastischen Segments eignet sich jedoch hervorragend zum Auffangen der Vorspannkraft, die in axialer Richtung orientiert ist und somit entlang dieses elastischen Segments verlaufen kann.

Vorteilhafterweise können über die Vorspannung die Winkel der angrenzenden Flächen der Auflagerflächen 13,14 festgelegt werden. In diesem Ausführungsbeispiel wurde für die radiale über den jeweiligen Anlagefläche 13,14 liegende Fläche ein Dichtlippenwinkel α gegenüber der Gegenfläche vorgesehen. Ein Dichtunglippenwinkel β wird von der jeweils radial innenliegenden, angrenzenden Fläche mit der Gegenfläche des Schleuderbleches 5 eingeschlossen. Damit kann die Größe der Anlageflächen 12,13 im Hinblick auf die Dichtwirkung optimal dimensioniert werden, indem zur Mediumseite ein steiler Dichtlippenwinkel α und zur Luftseite ein flacher Dichtlippenwinkel β vorgesehen wird.

Die erste Dichtlippe 11 und die zweite Dichtlippe 12 sind im Ausführungsbeispiel im wesentlichen gleich lang, womit die verzweigende Dichtlippe in axialer Richtung des Längsschnitts eine Y-Form bildet. Über das Längenverhältnis der beiden Dichtlippen ist ebenso eine Regelung der Auflagekraft der jeweiligen Auflagefläche 12,13 möglich. Je länger eine Dichtlippe gegenüber der anderen gewählt ist, umso geringer ist ihre Auflagekraft, weil sich die Vorspannung in dem Längenverhältnis entsprechender Weise auf die beiden Dichtlippen verteilt.

Vorteilhaft ist die Anordnung des Verzweigungspunktes 4 mittig zwischen dem Haltering 16 und den Gegenflächen auf dem Schleuderring 5. Auf diese Weise ist eine größtmögliche Bewegungsfreiheit für den Verzweigungspunkt 4 gewährleistet und damit ein substantieller Abrieb der ersten Dichtlippe 11 nicht schädlich ist.

Die erste Dichtlippe 11 unterliegt dem größten Lippenabrieb, da diese am stärksten einer Verschmutzung ausgesetzt ist. Deshalb ist damit zu rechnen, dass die Länge der ersten Dichtlippe 11 mit der Zeit schneller abnehmen wird als die der zweiten Dichtlippe 12. Dabei wandert der Verzweigungspunkt 4 radial nach außen und stellt eine optimale Auflagekraft der Auflagefläche 13 auch nach einem beträchtlichen Lippenabrieb sicher. Damit wird auch in einer späteren Nutzungsphase der Dichtungsanordnung ein schleifend dichtende erste Dichtlippe sichergestellt und damit die gesamte Dichtwirkung der Dichtungsanordnung 1 vorteilhaft verlängert.

Die beschriebene Brücken- oder Wippenfunktion der verzweigenden Dichtlippe 17 verhindert wirkungsvoll die Bildung einer Spaltdichtung bzw. in Kontaktverlust der dichtenden Oberflächen zueinander, d.h. sie erhält die Überdeckung über lange Zeit aufrecht.

Fig. 2 zeigt die Dichtungsanordnung aus Fig. 2 im Ausgangszustand ohne Vorspannung. Zur Verdeutlichung wurde ohne die Anordnung des Schleuderringes 5 und des Dichtungsringes 2 zueinander zu verändern die verzweigende Dichtungslippe 17 mit dem zylindrischen Teil des Schleuderringes 5 überlappend dargestellt.

In diesem Ausgangszustand der verzweigenden Dichtlippe 17 sind die Schenkel des Ypsilons, d.h. die V-bildenden Dichtlippen 11,12 am wenigsten voneinander abgespreizt. Damit nun in die Anlageflächen 12,13 der ersten und zweiten Dichtlippe 11,12 in diesem Zustand den kürzesten Abstand zueinander ein.

Zusammenfassend betrifft die Erfindung ein Dichtungsring zum Abdichten eines Wälzraumes eines Wälzlagers, insbesondere Radlager, mit einem einen elastischen Teil haltenden Haltering, wobei der elastische Teil eine zur dichtenden Anlage an ein relativ zum Dichtungsring rotierbares Element vorgesehene, verzweigende Dichtlippe aufweist, wobei die verzweigende Dichtlippe an einem Verzweigungspunkt in eine erste und eine zweite Dichtlippe verzweigt. Ziel ist es die Lebensdauer zu verlängern und gleichzeitig Dichtungsringe und Dichtugnsanordnungen für Wälzlager kosteneffektiv herzustellen. Dies wird gelöst, indem unter Vorspannung der verzweigenden Dichtlippe der Verzweigungspunkt in Abhängigkeit des Lippenabriebs bewegbar ist. Somit erfüllt die verzweigende Dichtlippe eine Art Wippenfunktion, die es erlaubt einen notwendigen Anpressdruck über eine lange Betriebszeit aufrechtzuerhalten.

### Bezugszeichenliste

- α: erster Winkel
- β: zweiter Winkel
- 1: Dichtungsanordnung
- 2: Dichtungsring
- 3: elastischer Teil
- 4: Verzweigungspunkt
- 5: Schleuderring
- 6: radiale Dichtlippe
- 7: Befestigungselement
- 8: Außenring
- 9: Innenring
- 10: Encoder
- 11: erste Dichtlippe
- 12: zweite Dichtlippe
- 13: Auflagefläche
- 14: Auflagefläche
- 15: Wälzraum
- 16: Haltering
- 17: verzweigende Dichtlippe

## Patentansprüche

1. Dichtungsring (2) zum Abdichten eines Wälzraumes (15) eines Wälzlagers, insbesondere Radlager, mit einem einen elastischen Teil (3) haltenden Haltering (16), wobei der elastische Teil (3) eine zur dichtenden Anlage an ein relativ zum Dichtungsring (2) rotierbares Element (5) vorgesehene, verzweigende Dichtlippe (17) und eine weitere Dichtlippe aufweist, wobei die verzweigende Dichtlippe (17) an einem in Abhängigkeit eines Lippenabriebes bewegbaren Verzweigungspunkt (4) in eine erste (11) und eine zweite Dichtlippe (12) verzweigt und wobei die erste Dichtlippe (11) und die zweite Dichtlippe (12) unter Vorspannung an dem rotierbaren Element anliegen, **dadurch gekennzeichnet, dass** die weitere Dichtlippe als radiale Dichtlippe (6) ausgebildet ist und dass die erste Dichtlippe (11) und die zweite Dichtlippe (12) axiale Dichtlippen sind und dass die verzweigende Dichtlippe (17) zwischen dem Verzweigungspunkt (4) und dem Haltering (16) ein zylindrisches, elastisches Segment aufweist.

2. Dichtungsring (2) nach Anspruch 1, wobei die erste (11) und die zweite (12) Dichtlippe zur dichtenden Anlage an ein oder zwei relativ zum Dichtungsring (2) rotierbare Elemente (5) vorgesehen sind.

3. Dichtungsring (2) nach einem der vorhergehenden Ansprüche, wobei die Anlageflächen (13,14) der ersten und zweiten Dichtlippe (11,12) im gegenüber der Gegenflächen des jeweiligen rotierbaren Elementes (5) vorgespannten Zustand einen größeren Abstand voneinander aufweisen als in einem Ausgangszustand.

4. Dichtungsring (2) nach Anspruch 3, wobei sich durch die Vorspannung der verzweigenden Dichtlippe (17) verursachten Radialkräfte der ersten und zweiten Dichtlippe (11,12) im Verzweigungspunkt (4) gegenseitig kompensieren.

5. Dichtungsring (2) nach Anspruch 3, wobei die verzweigende Dichtlippe (17) im Längsschnitt im Wesentlichen eine Y-Form aufweist,

6. Dichtungsring nach einem der vorhergehenden Ansprüche, wobei der Dichtungsring ein Schleuderring ist.

7. Dichtungsanordnung (1) mit einem Dichtungsring (2) nach einem der Ansprüche 1 bis 6 und mit einem relativ zum Dichtungsring (2) rotierbaren Element (5).

8. Dichtungsanordnung (1) nach Anspruch 7, wobei das relativ zum Dichtungsring (2) rotierbare Elemente (5) ein Schleuderring (5) oder ein weiterer Dichtungsring ist.

9. Wälzlager, insbesondere Radlager, mit einer Dichtungsanordnung (1) nach Anspruch 7 oder 8.

## Claims

1. Gasket (2) for sealing a rolling space (15) of an anti-friction bearing, in particular a wheel bearing, having a securing ring (16) which secures an elastic part (3), the elastic part (3) having a branching sealing lip (17), which is provided for sealing contact with an element (5) which can be rotated relative to the gasket (2), and a further sealing lip, the branching sealing lip (17) branching into a first (11) and a second sealing lip (12) at a branching point (4) which can be moved depending on lip abrasion, and the first sealing lip (11) and the second sealing lip (12) bearing with prestress against the rotatable element, **characterized in that** the further sealing lip is configured as a radial sealing lip (6), and **in that** the first sealing lip (11) and the second sealing lip (12) are axial sealing lips, and **in that** the branching sealing lip (17) has a cylindrical, elastic segment between the branching point (4) and the securing ring (16).

2. Gasket (2) according to Claim 1, the first (11) and the second (12) sealing lip being provided for sealing contact with one or two elements (5) which can be rotated relative to the gasket (2).

3. Gasket (2) according to either of the preceding claims, the bearing faces (13, 14) of the first and second sealing lip (11, 12) being at a greater spacing from one another in the prestressed state with respect to the opposing faces of the respective rotatable element (5) than in a starting state.

4. Gasket (2) according to Claim 3, radial forces of the first and second sealing lip (11, 12) at the branching point (4) which are caused as a result of the prestress of the branching sealing lip (17) compensating for one another.

5. Gasket (2) according to Claim 3, the branching sealing lip (17) having substantially a Y-shape in longitudinal section.

6. Gasket according to one of the preceding claims, the gasket being a thrower ring.

7. Seal arrangement (1) having a gasket (2) according to one of Claims 1 to 6 and having an element (5) which can be rotated relative to the gasket (2).

8. Seal arrangement (1) according to Claim 7, the element (5) which can be rotated relative to the gasket (2) being a thrower ring (5) or a further gasket.

9. Anti-friction bearing, in particular wheel bearing, having a seal arrangement (1) according to Claim 7 or 8.

## Revendications

1. Anneau d'étanchéité (2) pour l'étanchéité d'un espace de roulement (15) d'un palier à roulement, en particulier d'un palier de roue, comprenant un anneau de retenue (16) retenant une pièce élastique (3), la pièce élastique (3) présentant une lèvre d'étanchéité ramifiée (17), prévue pour l'application hermétique contre un élément (5) pouvant tourner par rapport à l'anneau d'étanchéité (2) et une lèvre d'étanchéité supplémentaire, la lèvre d'étanchéité ramifiée (17), au niveau d'un point de ramification (4) déplaçable en fonction d'une usure de la lèvre, se ramifiant en une première (11) et une deuxième (12) lèvre d'étanchéité, et la première lèvre d'étanchéité (11) et la deuxième lèvre d'étanchéité (12) s'appliquant avec précontrainte contre l'élément rotatif, **caractérisé en ce que** la lèvre d'étanchéité supplémentaire est réalisée sous forme de lèvre d'étanchéité radiale (6) et **en ce que** la première lèvre d'étanchéité (11) et la deuxième lèvre d'étanchéité (12) sont des lèvres d'étanchéité axiales et **en ce que** la lèvre d'étanchéité ramifiée (17) présente, entre le point de ramification (4) et l'anneau de retenue (16), un segment élastique cylindrique.

2. Anneau d'étanchéité (2) selon la revendication 1, dans lequel la première (11) et la deuxième (12) lèvre d'étanchéité sont prévues pour l'application hermétique contre un ou deux éléments (5) pouvant tourner par rapport à l'anneau d'étanchéité (2).

3. Anneau d'étanchéité (2) selon l'une quelconque des revendications précédentes, dans lequel les surfaces d'appui (13, 14) de la première et de la deuxième lèvre d'étanchéité (11, 12) présentent, dans l'état précontraint par rapport aux surfaces conjuguées de l'élément rotatif respectif (5), une plus grande distance l'une de l'autre que dans un état initial.

4. Anneau d'étanchéité (2) selon la revendication 3, dans lequel des forces radiales de la première et de la deuxième lèvre d'étanchéité (11, 12), provoquées par la précontrainte de la lèvre d'étanchéité ramifiée (17), se compensent mutuellement au niveau du point de ramification (4).

5. Anneau d'étanchéité (2) selon la revendication 3, dans lequel la lèvre d'étanchéité ramifiée (17) présente essentiellement une forme en Y en coupe longitudinale.

6. Anneau d'étanchéité selon l'une quelconque des revendications précédentes, dans lequel l'anneau d'étanchéité est un anneau déflecteur.

7. Agencement d'étanchéité (1) comprenant un anneau d'étanchéité (2) selon l'une quelconque des revendications 1 à 6 et un élément (5) pouvant tourner par rapport à l'anneau d'étanchéité (2).

8. Agencement d'étanchéité (1) selon la revendication 7, dans lequel l'élément (5) pouvant tourner par rapport à l'anneau d'étanchéité (2) est un anneau déflecteur (5) ou un autre anneau d'étanchéité.

9. Palier à roulement, en particulier palier de roue, comprenant un agencement d'étanchéité (1) selon la revendication 7 ou 8.
